# EUROPEAN PATENT SPECIFICATION

(11) **EP 1 893 543 B1**
(45) Date of publication and mention of the grant of the patent: **01.09.2010**
(21) Application number: 06744179.0
(22) Date of filing: 13.06.2006
(51) Int. Cl.: C03C 17/34, C03C 17/36

(54) **COATED GLASS PANE**
BESCHICHTETE GLASSCHEIBE
PANNEAU EN VERRE REVÊTU

(30) Priority: 16.06.2005 GB 0512253
(43) Date of publication of application: 05.03.2008
(73) Proprietor: Pilkington Group Limited, St. Helens Merseyside WA10 3TT (GB)
(72) Inventor: ERSOY, Ayse, Merseyside PR9 9NG (GB); BILLINGE, Emma, Manchester M6 8FZ (GB); JONES, Claire Elizabeth, Lancashire L40 4LE (GB)
(74) Representative: Marsh, Andrew James
(86) International application number: PCT/GB2006/002132
(87) International publication number: WO 2006/134335

(56) References cited:
- EP-A- 0 934 913
- WO-A-97/39481
- GB-A- 1 265 831
- US-A- 4 650 698
- US-A- 5 939 201
- PATENT ABSTRACTS OF JAPAN vol. 017, no. 674 (C-1140), 10 December 1993 (1993-12-10) & JP 05 221691 A (ASAHI GLASS CO LTD), 31 August 1993 (1993-08-31)

## Description

The invention relates to coated glass panes with a solar control coating and more specifically to heat treatable coated glass panes with a solar control coating.

Solar control coatings typically comprise a functional layer consisting of at least one metal or metal compound, the thickness and material of it being chosen to impart to the coated glass pane a reduced visible light and solar energy transmittance, such reduction taking place partially by absorption and partially by reflection. Typical materials for functional layers of solar control coatings are metals like Ni, Cr, Ti, Zr, Ta, Hf, Nb and their alloys, e.g. stainless steel or NiCr, furthermore certain compounds of these, e.g. their nitrides, borides and/or carbides. The total solar energy transmittance (usually given as TSHT or g value and comprising both the energy transfer by direct transmission and by re-radiation) of such solar control coated glass panes is typically slightly higher than, equal to or slightly lower than their light transmittance T_{L}.

The functional layers of such solar control coatings are usually embedded between a lower dielectric layer, arranged close to the glass surface, and an upper dielectric layer above the functional layer, one or both providing one or more of the functions:
- anti-reflection of the functional layer by optical interference;
- influencing the growth of the functional layer;
- mechanical and chemical protection to improve, e.g., the corrosion and scratch resistance of the coating;
- barrier against diffusion of gases like oxygen or nitrogen, of components of the glass substrate and/or of components of the coating layers;
- stabilisation of the functional layer during heat treatments, etc.

Such dielectric layers are often comprised only of a single layer but may alternatively comprise several partial layers and/or mixtures of mainly dielectric materials which may however be supplemented by low amounts and/or thin layers of other materials including metals.

Heat treated glass panes which are toughened to impart safety properties and/or are bent are required for a large number of areas of application, for example for architectural or motor vehicle glazings. It is known that for thermally toughening and/or bending glass panes it is necessary to process the glass panes by a heat treatment at temperatures near or above the softening point of the glass used and then either to toughen them by rapid cooling or to bend them with the aid of bending means. The relevant temperature range is for standard float glass of the soda lime silica type typically about 590 - 690 °C, the glass panes being kept in this temperature range for several minutes before initiating the actual toughening and/or bending process.

"Heat treatment", "heat treated" and "heat treatable" in the following description and in the claims refers to thermal bending and/or toughening processes such as mentioned before.

Difficulties can arise if these glass panes are to be provided with coatings, particularly with coatings comprising at least one metal-based or oxidizable metal compound functional layer, e.g. to impart solar control properties. Such coatings are usually not heat treatable per se, which means that their functional layers tend to oxidize, thereby loosing at least partially their solar control function, or are even locally or fully destroyed. Although it would be possible to apply the coatings to the glass pane after the heat treatment has taken place, it would be preferable if coatings able to withstand such heat treatments could be made available.

When solar control coated glass panes are intended to be heat treatable, the dielectric layers embedding the functional layer need to be well selected to protect it against oxidisation during the heat treatment and to stabilize it against diffusion effects. Layers consisting essentially of silicon nitride, silicon oxinitride, aluminium nitride, aluminium oxinitride or their mixtures are well known and have been repeatedly proposed in the art as dielectric layers in heat treatable solar control coatings.

Solar control coatings such as described before are disclosed for example in JP-A 05-124 839, EP 0 386 993 B1, EP 0 501 632 B1, EP 0 536 607 B1, EP 0 546 302 B1, EP 0 747 329 B1, EP 1 218 307 A1, EP 1 448 491 A1, US 6,689,475 B1, WO 2004-046 058 A1, WO 2004-063 111 A1 and WO 2004-070 072 A2.

While certain of the known solar control coated glass panes have been shown to be of practical value and have been made available to the flat glass products market there is still a need for improvement and for the provision of alternative coatings allowing to further optimize the optical, mechanical and chemical properties of solar control coated glass panes.

The invention aims therefore generally to provide coated glass panes of the kind described hereinbefore providing the glass panes with solar control properties.

The invention aims more specifically to provide solar control coatings which withstand ordinary environmental influences during storage, transport and use of the coated glass panes and survive the mechanical and chemical conditions acting on the coated glass panes during usual handling and processing steps without a significant quality loss.

Even more specifically these coated glass panes shall be heat treatable and preserve their properties mentioned before also after a heat treatment. In this context the invention aims to keep the haze value of the coated glass panes low during a heat treatment.

A further aim is to minimize changes of the optical properties of the coated glass pane due to a heat treatment such that heat treated and non heat treated coated glass panes may be used side by side without appearing substantially different.

The invention aims particularly at achieving medium and high values of light and solar energy transmittance, e.g. light transmittance values of above 30 %.

The invention is defined in claim 1. Preferred embodiments of the invention are set out in the subclaims. A glazing comprising at least one inventive coated glass pane is subject of claim 10. A process for the manufacture of a heat treated solar control glass pane is subject of claim 11.

A coated glass pane according to the invention is provided with a solar control coating comprising in sequence, starting from the glass surface, at least the following transparent layers: a lower dielectric layer, a functional layer comprising at least one metal compound, and an upper dielectric layer, wherein the functional layer comprises at least one of the nitrides, carbides and/or borides tungsten, or of a tungsten-based alloy.

Tungsten based alloys are to be understood as alloys with a predominant content of the base material the relevant properties of which are still dominated by the base material. While the acceptable range of the content of the alloying partner(s) depends on the alloy partner(s) such alloys will typically comprise at least about 50 at.%, preferably at least about 75 at.% or most often at least about 90 at.% of the base material. Alloys containing about 10 - 30 at.% titanium and/or chromium and 90 - 70 at.% tungsten may be mentioned as examples for tungsten-based alloys.

Specifically, but not only, if the coated glass pane shall be heat treatable it is preferred that the functional layer comprises a nitride of tungsten or of a tungsten-based alloy with an atomic ratio of tungsten or tungsten-based alloy : nitrogen between about 10 : 1 and 1 : 2, even more preferred between about 3 : 1 and 1.01 : 1. It has been observed that tungsten atoms diffuse substantially less through the coating than other materials known for solar control purposes such as NiCr when subjected to a heat treatment which means that a functional layer comprising tungsten, a tungsten-based alloy or their nitride is less prone to degradation by heat treatment. Trials of the inventors indicate that if a tungsten nitride is provided with a tungsten to nitrogen atomic ratio slightly above 1 : 1 (slightly substoichiometric tungsten nitride) further optimized product properties and processability can be achieved.

The thickness of the transparent functional layer is primarily chosen according to the light and solar energy transmittance the coated glass pane is intended to have. For the most purposes a thickness in the range of about 2 to 40 nm will be appropriate, a thickness range of 2 - 15 nm being particularly preferred for high and medium values of the light and solar energy transmittance.

The functional layer may be composed of a single layer or may comprise several partial layers and/or a material mixture as long as the predominant part of the functional layer is composed of the materials listed before such that the solar control function is predominantly provided by the materials specified according to the invention. As predominant part shall be understood a content of at least about 50 %, usually at least about 75 % and most specifically at least about 90 %, each in atomic percent of the whole functional layer. The functional layer does specifically not comprise any substantial amount of silver or other noble metals. It does furthermore not contain any substantial amount of oxygen.

The technical purpose of the lower and upper dielectric layers, which may, as mentioned above, be single layers or may be composed of several partial layers, is primarily to anti-reflect the functional layer. In addition hereto - specifically in case the coated glass shall be heat treatable - the materials of these dielectric layers are preferably chosen such that a barrier function against diffusion of oxygen and other atoms through the coating during a heat treatment is provided.

For the lower and upper dielectric layers mainly serving as anti-reflection layers a number of materials well known to the person skilled in the art for such purpose may be chosen. The upper and/or the lower dielectric layer each comprise at least one layer of a nitride or oxinitride of silicon and/or aluminium. Specifically preferred are layers of the silicon aluminium oxinitride type with an atomic ratio A1 : Si in the order of about 2 - 10 % and an atomic ratio O : N in the order of about 3 - 30 %.

To achieve the desired anti-reflection property and to function properly as a diffusion barrier the upper dielectric layer shall preferably have a geometrical thickness between about 20 and 60 nm for the materials mentioned before which have a refractive index at 550 nm of about 2. For the lower dielectric layer having the same refractive index a thickness between about 5 and 30 nm is preferred. These thicknesses would need to be adapted, as is well known in the art, if materials having different refractive indices were used.

A preferred solar control coating according to the invention consists of a lower dielectric layer comprising a layer of aluminium-doped silicon nitride or oxinitride, of a functional layer comprising a nitride of tungsten or of a tungsten-based alloy and of an upper dielectric layer comprising a layer of aluminium-doped silicon nitride or oxinitride, most preferably without any substantial further layer.

The thicknesses of the individual transparent layers of the solar control coating may be widely varied according to the specific properties aimed at. It is generally preferred if the thicknesses of the individual layers of the coating are set such that, if deposited on a clear glass pane having a light transmittance T_{L} without the coating of 90 %, the light transmittance T_{L} of the coated glass pane is in the range of about 10 - 70 %, preferably in the range of about 20 - 65 % and even more preferred in the range of more than 30 % up to 60 %. The total solar energy transmittance will at the same time be in the order of about 10 % to about 75 % (about 20 - 70 %, pref. more than about 30 % up to about 65 %).

At the same time or alternatively the thicknesses of the individual layers of the coating are set such that the light reflection R_{L} of the coated glass pane is in the range of about 10 - 35 %, preferably in the range of about 15 - 25 %.

The inventive coated glass allows achieving a comparably neutral appearance both in transmission and reflection. By setting the individual layer thicknesses appropriately colour characteristics can be achieved where the transmission colour values are in the range of 0 ≥ a_{T}* ≥ -3 and 0 ≥ b_{T}* ≥ -7 and the glass side reflection colour values are in the range of 2 ≥ a_{G}* ≥ -4 and 2 ≥ b_{G}* ≥ -10. The coated glass panes will therefore appear very neutral or most often slightly bluish, blue/green or blue/violet both in transmission and glass side reflection.

T_{L} and g are used in accordance with their general meaning as a measure of the flux transmitted through the coated glass pane as a percentage of the incident flux of luminous solar radiation (T_{L}) and as a ratio of the incident flux of total solar radiation (g).

The materials and thicknesses of the individual layers and specifically of the dielectric layers of the solar control coating are chosen such that the coated glass pane is heat treatable. While dielectric layers of the silicon and/or aluminium (oxi)nitride type are preferred, other well-known diffusion barrier materials like zinc-tin oxide, other silicon compounds or the like materials may alternatively be chosen.

While heat treatability in its broadest meaning encompasses any coated glass whose quality (including specifically its optical properties and the number of visible faults) is not significantly impaired during a heat treatment, it is preferred to choose the materials and thicknesses of the individual layers of the solar control coating such that ΔE* ≤ 3, preferably ≤ 2.5 and most preferably ≤ 2 for each of glass side reflection (AE_{G}*), film or coated side reflection (AE_{F}*) and transmission (AE_{T}*) after such heat treatment, ΔEᵢ* being defined as ΔEᵢ* = ((Δaᵢ*)² + (Δb_{¡}*)² + (ΔL_{¡}*)²)^{1/2}, wherein ΔLᵢ*, Δaᵢ* and Δbᵢ* are the differences of the colour values Lᵢ*, aᵢ*, bᵢ* of the coated glass pane each before and after a heat treatment.

The invention is furthermore directed to heat treated coated glass panes such as described hereinbefore which even after the heat treatment display a haze value of at most 0.5, preferably of at most 0.4. "Haze" designates the percentage of transmitted light which in passing through the coated glass pane deviates from the incident beam by forward scattering (measured in accordance with ASTM D 1003-61). A haze value which remains low during a heat treatment is a good indicator for heat treatability.

The invention is finally directed to a process for the manufacture of a heat treated solar control glass pane wherein a solar control coated glass pane such as claimed in the product claims is heat treated for up to 10 minutes at a temperature of 590 - 690 °C in an oxygen-containing atmosphere such that its haze value remains below 0.5.

While the inventive solar control coating will most often consist only of the three essential layers described hereinbefore it is within the scope of the invention to add further auxiliary layers generally known in the art like primer layers, outer protective layers, barrier layers, colour modification layers, etc., to the coating to modify its properties as long as these additional layers do not impair the basic properties of the coated glass aimed at by the invention.

It is furthermore within the scope of the invention to add minor amounts of additives (dopants) to the materials of the individual layers, e.g., if their deposition efficiency can be enhanced thereby, as long as the properties of the modified materials are not significantly impaired as compared to the materials without such additives (dopants).

The invention is not limited to a certain production process for the solar control coating. However, it is particularly preferred if at least one of the layers and preferably all layers is/are applied by magnetron cathode sputtering, either in the DC mode or in the medium frequency mode, wherein metallic or semiconducting targets are sputtered non-reactively or reactively in a suitable sputtering atmosphere. Depending of the materials to be sputtered planar or rotating targets may be used.

Solar control coated glass panes according to the invention may be used, e.g., as monolithic glass panes, as part of multiple glazings with at least one gas-filled interspace, as part of laminated glazings, for technical, architectural, automotive or other applications. Solar control glazings comprising an inventive coated glass pane are preferably installed such that the solar control coating is arranged on the second surface counted from the outside of the glazing. Counted surfaces in this respect are only surfaces facing the atmosphere or a gas-filled interspace of the glazing.

The glass panes used as a substrate for the solar control coating according to the invention usually consist of soda lime silica glass produced by the float glass process and may be clear or tinted. Other glass compositions are generally not excluded. The thicknesses of the glass panes depend upon their intended application and are usually but without limitation between about 2 and 12 mm.

The invention is hereinafter explained in some more detail with the aid of two examples

### Example 1 (not embodying the invention)

A 4 mm thick clear float glass pane having a light transmittance T_{L} of about 90 % before being coated was placed in a laboratory sputtering device in which an Al-doped silicon target containing about 10 wt.% aluminium and 90 wt.% silicon and a tungsten target were arranged and the sputtering chamber was evacuated.

In a first coating step the lower dielectric layer of an inventive solar control coating was deposited on the glass pane. For this purpose a sputtering gas mixture comprising Ar and N₂ in a ratio of 12 : 5 was introduced into the sputtering chamber. The Al-doped silicon target was activated by applying a sputtering power of 900 W using a pulsed power supply. The glass pane was moved past the Al-doped silicon target until an Al-doped silicon oxinitride layer with a thickness of about 15 nm was deposited. The compound layer contained mainly nitrogen, but also a low amount of oxygen stemming from residual oxygen in the sputtering atmosphere.

In a second coating step the functional layer of the solar control coating was deposited on the lower dielectric layer. For this purpose a sputtering gas comprising only Ar was introduced into the sputtering chamber. The tungsten target was activated by applying a sputtering power of 300 W using a DC power supply. The glass pane was moved past the tungsten target until a pure tungsten layer with a thickness of about 5 nm was deposited.

In a third coating step the upper dielectric layer of the solar control coating was deposited on the functional layer. For this purpose a sputtering gas mixture comprising Ar and N₂ in a ratio of 12 : 5 was again introduced into the sputtering chamber. The Al-doped silicon target was activated again by applying a sputtering power of 900 W using a pulsed power supply. The glass pane was moved past the Al-doped silicon target until a further Al-doped silicon oxinitride layer with a thickness of about 35 nm was deposited.

The coated glass pane was thereafter heat treated for 5 minutes at 650 °C.

The main optical properties of the solar control coated glass pane according to Example 1 are listed in Table 1. The first line contains the optical values immediately after deposition of the coating. The second line contains the optical values after the heat treatment of the coated glass pane.

The values for the visible light transmittance T_{L} and the reflectance R_{L} were measured and calculated according to conventional methods, e.g. by using a Perkin Elmer Lambda 900 Spectrophotometer or a HunterLab Ultrascan XE (light type D65, angle of incidence 10°) to obtain spectral curves of transmission and reflection. All transmittance and reflectance values including the total solar energy transmittance (expressed as g value) were calculated according to EN 410.

The colour characteristics were measured and reported using the well established CIE LAB Lᵢ*, aᵢ*, bᵢ* coordinates (see e.g. [0030] and [0031] in WO 2004-063 111 A1).

**Table 1**

| | **T_{L}** | **R_{L}** | **R_{L}** | **g** | **Transmission** | | | **Glass Side Reflection** | | | **Film Side Reflection** | | |
|---|---|---|---|---|---|---|---|---|---|---|---|---|---|
| | **[%]** | **[%]** | **[%]** | | **properties** | | | **properties** | | | **properties** | | |
| | | **glass** | **film** | | **(D65 at 10°)** | | | **(D65 at 10°)** | | | **(D65 at 10°)** | | |
| | | **side** | **side** | | **L_{T}^{*}** | **a_{T}*** | **b_{T}*** | **L_{G}^{*}** | **a_{G}*** | **b_{G}*** | **L_{F}^{*}** | **a_{F}*** | **b_{F}*** |
| **As deposited** | **45** | **22.3** | **18.6** | **0.53** | **72.9** | **-0.8** | **-0.7** | **54.6** | **-2.8** | **-6.5** | **50.1** | **-0.2** | **6.8** |
| **Heat treated** | **47.1** | **21.3** | **17.7** | **0.55** | **74.3** | **-0.7** | **-0.1** | **53.5** | **-2.9** | **-6.7** | **49** | **-0.3** | **5.1** |

The colour variation values which were caused by the heat treatment were calculated to:
ΔE_{T}* = 1.53 (Transmission), ΔE_{G}* = 1.12 (Glass side reflection) and ΔE_{F}* = 2.03 (Film side reflection).

All these values are well below 3 indicating only a slight change in the appearance of the coated glass pane both in transmission and in reflection.

The haze value was 0.15 before and 0.35 after the heat treatment which is well below the upper limit of about 0.5 which is usually applied to define heat treatable coatings.

It can be seen from Table 1 that with a solar control coating according to Example 1 light transmittance values of slightly below 50 % are achieved, the g value being at the same time slightly more than 0.5 (corresponding to a solar energy transmittance of more than 50 %). The transmission colour is very neutral, the glass side reflected colour, which is the relevant colour in most solar control window applications, is slightly bluish, whereas the less important film glass side colour is slightly yellowish. These values change only slightly during the heat treatment.

Solar control coated glass panes according to Example 1 passed a number of ageing and durability tests.

One way of testing the chemical durability of a coated glass pane is to boil the coated glass sample in about 0.5 l of 5 % HCl for 1 hour.

Mechanical durability may be tested by applying the Taber test. A conventional Taber abrader is used to subject the 10 * 10 cm² coated glass sample to 300 revolutions of two C.S. 10 F abrasion wheels each having attached a 500 g weight. If no substantial scratches appear when viewed with the naked eye under visible light, the test is passed and the coated glass pane is said to be mechanically durable.

Both tests were passed by a coated sample according to Example 1.

### Example 2

A 4 mm thick clear float glass pane having a light transmittance T_{L} of about 90 % before being coated was placed in a laboratory sputtering device in which an Al-doped silicon target containing about 10 wt.% aluminium and 90 wt.% silicon and a tungsten target were arranged and the sputtering chamber was evacuated.

In a first coating step the lower dielectric layer of an inventive solar control coating was deposited on the glass pane. For this purpose a sputtering gas mixture comprising Ar and N₂ in a ratio of 12 : 5 was introduced into the sputtering chamber. The Al-doped silicon target was activated by applying a sputtering power of 900 W using a pulsed power supply. The glass pane was moved past the Al-doped silicon target until an Al-doped silicon oxinitride layer with a thickness of about 15 nm was deposited. The compound layer contained mainly nitrogen, but also a low amount of oxygen stemming from residual oxygen in the sputtering atmosphere.

In a second coating step the functional layer of the solar control coating was deposited on the lower dielectric layer. For this purpose a sputtering gas mixture comprising Ar and N₂ in a ratio of 3 : 4 was introduced into the sputtering chamber. The tungsten target was activated by applying a sputtering power of 300 W using a DC power supply. The glass pane was moved past the tungsten target until a tungsten nitride layer with a thickness of about 5 nm was deposited. The nitrogen content of the sputter atmosphere was set such that the tungsten nitride layer was essentially stoichiometric. Slightly substoichiometric tungsten nitride with a somewhat lower nitrogen content than 1 : 1 (atomic ratio nitrogen : tungsten) might have been used to optimize the coating further.

In a third coating step the upper dielectric layer of the solar control coating was deposited on the functional layer. For this purpose a sputtering gas mixture comprising Ar and N₂ in a ratio of 12 : 5 was again introduced into the sputtering chamber. The Al-doped silicon target was activated again by applying a sputtering power of 900 W using a pulsed power supply. The glass pane was moved past the Al-doped silicon target until a further Al-doped silicon oxinitride layer with a thickness of about 35 nm was deposited.

The coated glass pane was thereafter heat treated for 5 minutes at 650 °C.

The main optical properties of the solar control coated glass pane according to Example 2 are listed in Table 2. The first line contains the optical values immediately after deposition of the coating. The second line contains the optical values after the heat treatment of the coated glass pane.

All values in Table 2 were determined according to the methods described in the context of Example 1.

**Table 2**

| | **T_{L}** | **R_{L}** | **R_{L}** | **g** | **Transmission** | | | **Glass Side Reflection** | | | **Film Side Reflection** | | |
|---|---|---|---|---|---|---|---|---|---|---|---|---|---|
| | **[%]** | **[%]** | **[%]** | | **properties** | | | **properties** | | | **properties** | | |
| | | **glass** | **film** | | **(D65 at 10°)** | | | **(D65 at 10°)** | | | **(D65 at 10°)** | | |
| | | **side** | **side** | | **L_{T}^{*}** | **a_{T}*** | **b_{T}*** | **L_{G}^{*}** | **a_{G}*** | **b_{G}*** | **L_{F}^{*}** | **a_{F}*** | **b_{F}*** |
| **As deposited** | **55** | **22.3** | **20.6** | **0.61** | **79** | **-0.5** | **0.8** | **54.5** | **-2.8** | **-5.5** | **52.5** | **-0.9** | **2.3** |
| **Heat treated** | **56** | **22.4** | **20.5** | **0.62** | **79.6** | **-0.4** | **1** | **54.6** | **-2.7** | **-4.7** | **52.3** | **-0.9** | **2.5** |

The colour variation values which were caused by the heat treatment were calculated to:
ΔE_{T}* = 0.64 (Transmission), ΔE_{G}* = 0.81 (Glass side reflection) and ΔE_{F}* = 0.28 (Film side reflection).

All these values are well below I indicating a practically invisible change in the appearance of the coated glass pane both in transmission and in reflection.

The haze value was 0.15 before and 0.31 after the heat treatment which is well below the upper limit of 0.5 which is usually applied to define heat treatable coatings.

It can be seen from Table 2 that with a solar control coating according to Example 2 light transmittance values of about 55 % and g values of about 0.6 can be achieved. The transmission colour is extremely neutral, the glass side reflected colour is slightly bluish, whereas the coated glass side colour is neutral to very slightly yellowish. These values remain nearly unchanged during the heat treatment.

Solar control coated glass panes according to Example 2 passed a number of ageing tests among which were the HCl test and the Taber test mentioned in Example 1.

## Claims

1. Heat treatable coated glass pane with a solar control coating comprising in sequence at least the following transparent layers:
- a lower dielectric layer comprising a layer of a nitride or oxinitride of silicon and/or aluminium,
- a functional layer comprising at least one metal compound, and
- an upper dielectric layer comprising a layer of a nitride or oxinitride of silicon and/or aluminium,
**characterized in that**
- the functional layer comprises at least one of the nitrides, carbides and/or borides of tungsten or of a tungsten-based alloy.

2. Coated glass pane according to claim 1, **characterised in that** the functional layer comprises a nitride of tungsten or of a tungsten-based alloy with an atomic ratio of tungsten or tungsten-based alloy : nitrogen between 10 : 1 and 1 : 2.

3. Coated glass pane according to claim 2, **characterised in that** the functional layer comprises a nitride of tungsten or of a tungsten-based alloy with an atomic ratio of tungsten or tungsten-based alloy : nitrogen between 3 : 1 and 1.01 : 1.

4. Coated glass pane according to any of the foregoing claims, **characterised in that** the lower dielectric layer comprises a layer of aluminium-doped silicon nitride or oxinitride, the functional layer comprises a nitride of tungsten or of a tungsten-based alloy and the upper dielectric layer comprises a layer of aluminium-doped silicon nitride or oxinitride.

5. Coated glass pane according to any of the foregoing claims, **characterised in that** the thicknesses of the individual layers of the coating are set such that, if deposited on a clear glass pane having a light transmittance T_{L} without the coating of 90 %, the light transmittance T_{L} of the coated glass pane is in the range of 10 - 70 %, preferably in the range of 20 - 65 %, most preferred in the range of more than 30 % to 60 %.

6. Coated glass pane according to any of the foregoing claims, **characterised in that** the thicknesses of the individual layers of the coating are set such that the light reflection R_{L} is in the range of 10 - 35 %, preferably in the range of 15 - 25 %.

7. Coated glass pane according to any of the foregoing claims, **characterised in that** the thicknesses of the individual layers of the coating are set such that the transmission colour values are in the range of 0 ≥ a_{T}* ≥ -3 and 0 ≥ b_{T}* ≥ -7 and the glass side reflection colour values are in the range of 2 ≥ a_{g}* ≥ -4 and 2 ≥ b_{g}* ≥ -10.

8. Coated glass pane according to any of the foregoing claims, **characterised in that** ΔE* ≤ 3, preferably less than 2.5 and most preferred less than 2, for each of glass side reflection, coating side reflection and transmission after a heat treatment.

9. Heat treated coated glass pane according to any of the foregoing claims, **characterised in that** its haze value after the heat treatment is at most 0.5, preferably at most 0.4.

10. Solar control glazing comprising a coated glass pane according to any of the foregoing claims, the solar control coating being arranged on the second surface counted from the outside of the glazing.

11. Process for the manufacture of a heat treated solar control glass pane wherein a solar control coated glass pane according to any of claims 1 to 8 is heat treated for up to 10 minutes at a temperature of 590 - 690 °C in an oxygen-containing atmosphere such that its haze value remains below 0.5.

## Patentansprüche

1. Wärmebehandelbare beschichtete Glasscheibe mit einer Solarkontrollbeschichtung, die der Reihe nach mindestens die folgenden transparenten Schichten aufweist:
- eine untere dielektrische Schicht, die eine Schicht eines Nitrids oder Oxynitrids von Silicium und/oder Aluminium aufweist,
- eine funktionelle Schicht, die mindestens eine Metallverbindung enthält,
und
- eine obere dielektrische Schicht, die eine Schicht eines Nitrids oder Oxynitrids von Silicium und/oder Aluminium aufweist,
**dadurch gekennzeichnet, dass**
- die funktionelle Schicht mindestens eine unter den Nitriden, Carbiden und/oder Boriden von Wolfram oder einer Legierung auf Wolframbasis ausgewählte Verbindung enthält.

2. Beschichtete Glasscheibe nach Anspruch 1, **dadurch gekennzeichnet, dass** die funktionelle Schicht ein Nitrid von Wolfram oder einer Legierung auf Wolframbasis mit einem Atomverhältnis von Wolfram oder der Legierung auf Wolframbasis : Stickstoff von 10 : 1 bis 1 : 2 enthält.

3. Beschichtete Glasscheibe nach Anspruch 2, **dadurch gekennzeichnet, dass** die funktionelle Schicht ein Nitrid von Wolfram oder einer Legierung auf Wolframbasis mit einem Atomverhältnis von Wolfram oder der Legierung auf Wolframbasis : Stickstoff von 3 : 1 bis 1,01 : 1 enthält.

4. Beschichtete Glasscheibe nach einem oder mehreren der vorhergehenden Ansprüche, **dadurch gekennzeichnet, dass** die untere dielektrische Schicht eine Schicht von Aluminium-dotiertem Siliciumnitrid oder Siliciumoxynitrid aufweist, die funktionelle Schicht ein Nitrid von Wolfram oder einer Legierung auf Wolframbasis aufweist und die obere dielektrische Schicht eine Schicht von Aluminium-dotiertem Siliciumnitrid oder Siliciumoxynitrid aufweist.

5. Beschichtete Glasscheibe nach einem oder mehreren der vorhergehenden Ansprüche, **dadurch gekennzeichnet, dass** die Dicken der einzelnen Schichten der Beschichtung so eingestellt sind, dass nach Beschichten einer klaren Glasscheibe mit einer Lichtdurchlässigkeit T_{L} ohne Beschichtung von 90 % die Lichtdurchlässigkeit T_{L} der beschichteten Glasscheibe im Bereich von 10 - 70 %, vorzugsweise im Bereich von 20 - 65 % und am meisten bevorzugt im Bereich von mehr als 30 bis 60 % liegt.

6. Beschichtete Glasscheibe nach einem oder mehreren der vorhergehenden Ansprüche, **dadurch gekennzeichnet, dass** die Dicken der einzelnen Schichten der Beschichtung so eingestellt sind, dass die Lichtreflexion R_{L} im Bereich von 10 - 35 % und vorzugsweise im Bereich von 15 - 25 % liegt.

7. Beschichtete Glasscheibe nach einem oder mehreren der vorhergehenden Ansprüche, **dadurch gekennzeichnet, dass** die Dicken der einzelnen Schichten der Beschichtung so eingestellt sind, dass die Transmissions-Farbwerte im Bereich von 0 ≥ a_{T}* ≥ -3 bis 0 ≥ b_{T}* ≥ -7 und die glasseitigen Reflexions-Farbwerte im Bereich von 2 ≥ a_{g}* ≥ -4 bis 2 ≥ b_{g}* ≥ -10 liegen.

8. Beschichtete Glasscheibe nach einem oder mehreren der vorhergehenden Ansprüche, **dadurch gekennzeichnet, dass** für die glasseitige Reflexion, die beschichtungsseitige Reflexion sowie die Transmission nach einer Hitzebehandlung ΔE* ≤ 3, vorzugsweise kleiner als 2,5 und am meisten bevorzugt kleiner als 2 ist.

9. Wärmebehandelte beschichtete Glasscheibe nach einem oder mehreren der vorhergehenden Ansprüche, **dadurch gekennzeichnet, dass** ihr Trübungswert nach der Wärmebehandlung höchstens 0,5 und vorzugsweise höchstens 0,4 beträgt.

10. Solarkontrollverglasung, die eine beschichtete Glasscheibe nach einem oder mehreren der vorhergehenden Ansprüche aufweist, wobei die Solarkontrollbeschichtung auf der zweiten Oberfläche, gezählt von der Außenseite der Verglasung, angeordnet ist.

11. Verfahren zur Herstellung einer wärmebehandelten Solarkontrollglasscheibe, bei dem eine Glasscheibe mit Solarkontrollbeschichtung nach einem der Ansprüche 1 bis 8 bis zu 10 Minuten bei einer Temperatur von 590 bis 690 °C in einer sauerstoffhaltigen Atmosphäre so wärmebehandelt wird, dass ihr Trübungswert unter 0,5 bleibt.

## Revendications

1. Panneau de verre revêtu apte au traitement thermique, avec un revêtement antisolaire comprenant successivement au moins les couches transparentes suivantes :
- une couche diélectrique inférieure comprenant une couche d'un nitrure ou oxynitrure de silicium et/ou d'aluminium,
- une couche fonctionnelle comprenant au moins un composé métallique, et
- une couche diélectrique supérieure comprenant une couche d'un nitrure ou oxynitrure de silicium et/ou d'aluminium,
**caractérisé en ce que**
- la couche fonctionnelle comprend au moins un des nitrure, carbure et/ou borure de tungstène ou d'un alliage à base de tungstène.

2. Panneau de verre revêtu suivant la revendication 1, **caractérisé en ce que** la couche fonctionnelle comprend un nitrure de tungstène ou d'un alliage à base de tungstène en un rapport atomique tungstène ou alliage à base de tungstène:azote compris entre 10:1 et 1:2.

3. Panneau de verre revêtu suivant la revendication 2, **caractérisé en ce que** la couche fonctionnelle comprend un nitrure de tungstène ou d'un alliage à base de tungstène en un rapport atomique tungstène ou alliage à base de tungstène:azote compris entre 3:1 et 1,01:1.

4. Panneau de verre revêtu suivant l'une quelconque des revendications précédentes, **caractérisé en ce que** la couche diélectrique inférieure comprend une couche de nitrure ou d'oxynitrure de silicium dopé à l'aluminium, la couche fonctionnelle comprend un nitrure de tungstène ou d'un alliage à base de tungstène et la couche diélectrique supérieure comprend une couche de nitrure ou d'oxynitrure de silicium dopé à l'aluminium.

5. Panneau de verre revêtu suivant l'une quelconque des revendications précédentes, **caractérisé en ce que** les épaisseurs des différentes couches du revêtement sont choisies de telle sorte que, si elles sont déposées sur un panneau de verre transparent ayant un transmittance de la lumière T_{L} sans le revêtement de 90 %, la transmittance de la lumière T_{L} du panneau de verre revêtu est comprise dans l'intervalle de 10 à 70 %, avantageusement dans l'intervalle de 20 à 65 %, de préférence dans l'intervalle de plus de 30 % à 60 %.

6. Panneau de verre revêtu suivant l'une quelconque des revendications précédentes, **caractérisé en ce que** les épaisseurs des différentes couches du revêtement sont choisies de telle sorte que la réflexion de la lumière R_{L} est comprise dans l'intervalle de 10 à 35 %, de préférence dans l'intervalle de 15 à 25 %.

7. Panneau de verre revêtu suivant l'une quelconque des revendications précédentes, **caractérisé en ce que** les épaisseurs des différentes couches du revêtement sont choisies de telle sorte que les valeurs de couleur de transmission sont comprises dans l'intervalle de 0 ≥ a_{T}* ≥ -3 et 0 ≥ b_{T}* ≥ -7, et les valeurs de couleur de réflexion du côté du verre sont comprises dans l'intervalle de 2 ≥ a_{g}* ≥ -4 et 2 ≥ b_{g}* ≥ -10.

8. Panneau de verre revêtu suivant l'une quelconque des revendications précédentes, **caractérisé en ce que** ΔE* ≤ 3, avantageusement inférieure à 2,5 et de préférence inférieure à 2, pour chacun des facteurs consistant en la réflexion du côté du verre, la réflexion du côté du revêtement et la transmission, après un traitement thermique.

9. Panneau de verre revêtu ayant subi un traitement thermique suivant l'une quelconque des revendications précédentes, **caractérisé en ce que** sa valeur de trouble après traitement thermique est d'au plus 0,5, de préférence d'au plus 0,4.

10. Vitrage antisolaire comprenant un panneau de verre revêtu suivant l'une quelconque des revendications précédentes, le revêtement antisolaire étant disposé sur la deuxième surface en comptant à partir de l'extérieur du vitrage.

11. Procédé pour la production d'un panneau de verre antisolaire ayant subi un traitement thermique, dans lequel un panneau de verre revêtu antisolaire suivant l'une quelconque des revendications 1 à 8 est soumis à un traitement thermique pendant un temps allant jusqu'à 10 minutes et à une température de 590 à 690°C dans une atmosphère contenant de l'oxygène de telle sorte que sa valeur de trouble reste inférieure à 0,5.
